# EUROPÄISCHE PATENTSCHRIFT

(11) **EP 1 673 247 B1**
(45) Veröffentlichungstag und Bekanntmachung des Hinweises auf die Patenterteilung: **14.04.2010**
(21) Anmeldenummer: 04790217.6
(22) Anmeldetag: 08.10.2004
(51) Int. Cl.: B60H 1/00, B62D 25/14, B62D 21/17

(54) **BAUTEIL, INSBESONDERE HYBRIDTRÄGER FÜR EIN FAHRZEUG, UND VERWENDUNG EINES DERARTIGEN BAUTEILS**
COMPONENT, ESPECIALLY A HYBRID CARRIER FOR A VEHICLE, AND USE OF SAID TYPE OF COMPONENT
COMPOSANT, NOTAMMENT SUPPORT HYBRIDE POUR UN VEHICULE, ET UTILISATION D'UN TEL COMPOSANT

(30) Priorität: 08.10.2003 DE 10347230; 02.03.2004 DE 102004010615
(43) Veröffentlichungstag der Anmeldung: 28.06.2006
(73) Patentinhaber: Behr GmbH & Co. KG, 70469 Stuttgart (DE)
(72) Erfinder: DERLETH, Martin, 97453 Schonungen (DE); SCHMITZ, Jochen, 71229 Leonberg (DE); WOLF, Walter, 71570 Oppenweiler-Zell (DE)
(86) Internationale Anmeldenummer: PCT/EP2004/011280
(87) Internationale Veröffentlichungsnummer: WO 2005/035286

(56) Entgegenhaltungen:
- EP-A- 0 338 908
- EP-A- 1 298 035
- WO-A-02/20334
- DE-A1- 3 244 994
- DE-A1- 10 005 718
- DE-U1- 29 916 470
- FR-A- 2 789 043

## Beschreibung

Die Erfindung bezieht sich auf ein Bauteil, insbesondere ein Hybridbauteil für einen Träger eines Fahrzeugs. Des Weiteren betrifft die Erfindung die Verwendung eines derartigen Bauteils.

Aus dem Kraftfahrzeugbau sind aus Rohren gebildete Querträger bekannt, die aus Metall bestehen und entsprechend große Wandstärken aufweisen. Die Wandstärken sind dabei für eine ausreichende Form-, Biege-, Knick- und Torsionssteifigkeit sowie für eine ausreichende Druckbelastbarkeit entsprechend dick ausgeführt. Der als Rohr- oder Hohlprofil ausgebildete Querträger eignet sich prinzipiell zur Luftführung, beispielsweise von einer mittig im Frontbereich des Fahrzeugs angeordneten Klimaanlage zu seitlichen Ausströmern hin.

Durch die erforderliche Steifigkeit des Bauteils, insbesondere des Trägers und einem daraus resultierenden Querschnitt ergibt sich ein entsprechend hohes Gewicht des Bauteils. Zudem ist der benötigte Bauraum groß, während der zur Verfügung stehende Bauraum durch die Karosserie des Fahrzeugs begrenzt ist. Eine Verkleinerung des Bauteils würde einer Verkleinerung des Kanalquerschnitts nach sich ziehen, die zwar eine Gewichtsverringerung bedeutet, jedoch eine erhöhte Strömungsgeschwindigkeit bewirkt. Dies würde zu einer verstärkten Geräuschbildung und somit zur Beeinträchtigung des Komforts führen.

Darüber hinaus ist der Aufwand für Logistik und Fertigung des Bauteils mit einem Luftfohrungskanal hoch, da es sich um vorzufertigende Blasform- oder Spritzgussteile handelt. Bei Unfällen sind zudem aufwendige Sicherungsmaßnahmen für den Fall eines Kopfaufschlags erforderlich, welche beispielsweise ein Versenken der Austrittsdüsen des Luftführungskanals vorsehen.

Die DE 100 64 522 A1 beschreibt ein Bauteil, insbesondere einen Querträger zum Anordnen zwischen A-Säulen eines Kraftfahrzeuges, mit einem im wesentlichen rohrartigen Grundkörper, in dem wenigstens ein Kanal vorgesehen ist, wobei der Grundkörper innen mit Kunststoff zur Bildung von aus Kunststoff bestehenden Kanalwänden ausgekleidet ist. Dabei wird das Bauteil durch Einspritzen oder Gießen von Kunststoff ausgekleidet, wobei diese Kanalwände bilden. Ein derartiges Verfahren erfordert viele Arbeitsschritte und somit einen hohen Fertigungsaufwand. Dieses Bauteil weist zudem ein hohes Gewicht auf.

Aus der DE 200 21 556 U1 ist ein aus einem flexiblem Material gebildeter, luftdichter Schlauch als Fluid- oder Strömungskanal bekannt. Ein derartiger Schlauch kann nur mittels Kleben oder Schweißen verbunden werden, was aufgrund des geringen verfügbaren Bauraumes sehr aufwendig hinsichtlich einer genauen Positionierung ist. Auch hier ist die gleichzeitige Beförderung mehrerer Fluide nicht möglich.

Ferner zeigt die FR 2 789 043 ein Bauteil nach dem Oberbegriff des Anspruchs 1 und 2.

Der Erfindung liegt daher die Aufgabe zugrunde, ein besonders einfach aufgebautes Bauteil anzugeben, welches insbesondere für eine Führung eines Mediums, z.B. von Luft, geeignet ist. Des Weiteren sind Verwendungen des Bauteils angegeben.

Erfindungsgemäß wird die Aufgabe hinsichtlich des Bauteils durch die Merkmale des Anspruchs 1 oder 2 gelöst. Bezüglich der Verwendungen eines derartigen Bauteils wird die Aufgabe durch die Merkmale der Ansprüche 16 bis 18 gelöst.

Vorteilhafte Weiterbildungen der Erfindung sind Gegenstand der Unteransprüche.

Die Erfindung geht dabei von der Überlegung aus, dass ein Bauteil, insbesondere ein Hybridbauteil als Träger mit einer Eignung zur Luftverteilung im Innenraum eines Fahrzeugs derart vereinfacht werden sollte, dass eine besonders einfache Herstellung, ein leichter Austausch sowie ein deutlich Gewicht reduzierender Luftführungskanal im Bauteil angeordnet ist. Insbesondere sollte neben der Vereinfachung der Kanalführung gerade das Gewicht deutlich reduziert werden. Hierzu ist der einen Hohlraum aufweisende Grundkörper des Bauteils mit einer zumindest innen liegenden Kunststoffsauskleidung wenigstens bereichsweise versehen und insbesondere zumindest bereichsweise perforiert ausgebildet. Für eine möglichst große Gewichtsreduzierung ist die Kunststoffauskleidung durch einen im Hohlraum des Grundkörpers angeordneten Folienkanal aus Kunststoff gebildet.

Zweckmäßigerweise ist der Grundkörper aus mindestens zwei Elementen, z.B. einer Halbschale mit Deckel oder zwei Halbschalen, gebildet. Im geschlossenen Zustand des Bauteils ist durch den Hohlraum des geschossenen Grundkörpers und dem darin angeordneten Folienkanal in einfacher Art und Weise ein Strömungskanal, insbesondere ein Luftführungskanal gebildet. Der Grundkörper ist aus Metall, einem Leichtmetall oder deren Legierungen, insbesondere aus Aluminium, Magnesium, Titan oder Feinstahl, gebildet und weist eine Wanddicke von 0,4 mm bis 2,0 mm oder bis 3 mm, insbesondere von 0,7 mm bis 1,2 mm auf. Die Wanddicke kann dabei weitestgehend gleich bleibend sein oder über die Längs- und/oder Quererstreckung des Grundkörpers, angepasst an Festigkeits- oder Steifigkeitserfordernisse variieren. Mit einem derartigen dünnwandigen metallischen Grundkörper aus mehreren Elementen, z.B. Halbschalen, und einem Folienkanal aus Kunststoff ist es möglich, die herkömmlichen, dicken, kompakten Wände eines Hybridträgers durch eine dünne, kompakte Wand mit einer einfach anzubringenden, leichten Isolierung zu ersetzen. Der gesamte Hybridträger ist deutlich leichter und mit geringerem Aufwand herzustellen. Dabei kann ein Folienkanal gleichzeitig für mehrere oder alle Ausströmpunkte genutzt werden, wodurch auch eine zeitlich versetzte Nutzung des Folienkanals zur Beförderung unterschiedlicher Fluide an unterschiedliche Ausströmpunkte möglich ist. Im Deformationsfall können die Austrittsdüsen in den Folienkanal oder die Folienkanäle eintauchen, wobei der insbesondere aus Kunststofffolie gebildete Folienkanal nur geringen Widerstand leistet. Des Weiteren trägt der aus Blechhalbschalen mit geringer Wanddicke gebildete Grundkörper zu einer hohen Stabilität des Bauteils bei.

Bevorzugt ist der Folienkanal aus einem Thermoplast, insbesondere Polyethylen-Kunststoff oder Polypropylen-Kunststoff gebildet. Beispielsweise kann der Folienkanal aus physikalisch oder chemisch geschäumtem und extrudierten Kunststoff, insbesondere ein- oder mehrschichtig, geformt und gebildet sein. Bei einer bevorzugten Ausführungsform kann beispielsweise eine Schaumfolie aus Polypropylen oder Polyethylen vorgesehen sein. Dabei wird der Kunststoff vorzugsweise geschäumt und extrudiert, wodurch eine geringe Dichte bei hoher Belastbarkeit gegeben ist. Alternativ kann der Folienkanal aus einer gegebenenfalls mit einem Gewebe aus Kunststoftfasern oder Metallfasern versehenen, kompakten Folie ausgeführt sein. Beispiele hierfür sind Folien aus Polyvinylchlorid, Polypropylen, Polyethylen, Thermoplastisches Polyolefin, Thermoplastische Polyurethane. Durch eine derartige kompakte Kunststofffolie ist bei hoher Stabilität und Steifigkeit, insbesondere Knicksteifigkeit, eine geringe Foliendicke möglich ist. Mit Polyethylen- oder Polypropylenkunststoff ist ein sehr geringes Gewicht des Folienkanals erreichbar.

Durch die Verwendung derartiger Materialien für den Folienkanal sind akustische und/oder thermische Eigenschaften, wie z.B. akustisch und/oder thermisch isoliert, beliebig beispielsweise abschnittsweise durch einen entsprechend ausgeführten Schichtenaufbau des Kunststoffs für den Folienkanal einstellbar. Bevorzugt weist der Folienkanal eine Kanalwand auf mit einer Reißfestigkeit von mindestens 1 bar Überdruck und einer Temperaturbeständigkeit von 85°C bis mindestens 120°C auf. Hierdurch ist sichergestellt, dass sowohl bei Überdruck, z.B. bei geschlossenen Auslassdüsen des Strömungskanals, und eingeschaltetem Lüfter als auch bei besonders hohen thermischen Belastungen, z.B. durch Sonneneinstrahlung, der Folienkanal formstabil und funktionsstabil bleibt.

In einer möglichen Ausführungsform weist der Folienkanal eine Wanddicke von 0,2 mm bis 0,5 mm und eine Dichte des Kunststoffs von 60 g/l bis 200 g/l oder 300 g/l auf. Dabei weist der Folienkanal eine wandstabile Struktur auf. Beispielsweise ist die Haut oder das verformbare Material entsprechend flexibel, insbesondere elastisch ausgeführt, so dass eine Faltenbildung und somit ein Verkleben der Kanalwand des Folienkanals sicher vermieden ist. Gleichzeitig wird durch die Verwendung eines elastischen, insbesondere gummiartigen Materials mit besonders guten akustischen Dämpfungseigenschaften eine Geräuschbildung unterdrückt und demzufolge der Fahrkomfort erhöht.

In einer einfachen Ausführungsform ist der Folienkanal aus mindestens zwei Kunststofflagen oder Kunststofffolien gebildet, die unter Bildung eines Hohlraums möglichst übereinander angeordnet sind. Zweckmäßigerweise ist der Folienkanal thermisch klebend und/oder haftend am Grundkörper, insbesondere dessen Innenwand, befestigt. Alternativ oder zusätzlich kann der Folienkanal mittels Befestigungselementen am Grundkörper gehalten sein.

In einer erfindungsgemäßen Ausbildung des Strömungskanals als sogenannter Mehrkammerkanal ist der Folienkanal mit einer Trennwand, insbesondere einer elastischen, formbaren und/oder faltbaren Trennwand, versehen. Durch eine derartig flexibel formbare Trennwand sind für die einzelnen Kammerkanäle variable Querschnitte einstellbar. Die Trennwand kann dabei durch eine separate Kunststofffolie, welche zwischen den beiden Kunststofflagen des Folienkanals angeordnet ist, gebildet sein. Durch mehrere Kammerkanäle, die jeweils durch mindestens eine Trennwand in Form einer Kunststofffolie voneinander getrennt sind, können unterschiedliche Strömungsmedien, z.B. Warmluft, Kaltluft, Frischluft, zu verschiedenen Ausströmpunkten geführt werden.

Alternativ oder zusätzlich zur Trennwand kann zur Bildung eines Mehrkammerkanals im Grundkörper der Folienkanal einen kleineren Querschnitt aufweisen als der Querschnitt des Grundkörpers. Durch entsprechende Anordnung des Folienkanals mit kleinerem Querschnitt kann mindestens ein Zweikammerkanal gebildet sein. Dazu liegt der Folienkanal zumindest an einer Innenwand des Grundkörpers an. Bei einer nicht am Grundkörper anliegenden Anordnung des Folienkanals können mehr als zwei Kammerkanäle gebildet sein. Eine zusätzliche Trennwand oder Trennfolie kann entfallen.

Für eine möglichst gute Aussteifung, insbesondere Knick-, Beul- und/oder Torsionssteifigkeit des Grundkörpers kann dieser zusätzlich an der Innenwand wenigstens teilweise mit angespritztem Kunststoff ausgekleidet sein.

Hierdurch ist eine zusätzliche Isolierung und/oder eine verbesserte Kraftübertragung und Kräftestabilität erreicht.

Des Weiteren kann der Folienkanal auf seiner äußeren, dem Grundkörper zugewandten Seite mit Verstärkungselementen, z.B. Rippen, Noppen, versehen sein. Hierdurch ist der Folienkanal tragfähiger und stabiler ausgeführt.

In einer weiteren erfindungsgemäßen Ausgestaltung sind mehrere Folienkanäle im Grundkörper angeordnet, wobei diese zur Bildung eines Mehrkammerkanals ineinander gefügt sind. Hierdurch kann die Isolierung des Kanals und der Kammern untereinander verbessert werden. Zusätzlich oder alternativ kann bei einem flexiblen Folienkanal dessen Oberfläche mit einer Struktur versehen sein, die ein Zusammenhaften der Kanalwände verhindert.

Zum einfachen Formen und Einbringen des Folienkanals gibt es verschiedene Vorgehensweisen.

Beispielsweise wird in einem Hohlraum des Grundkörpers der Folienkanal aus Kunststoff eingefügt, insbesondere mechanisch und/oder thermisch mit oder ohne Druck eingefügt.

Dabei kann der Folienkanal im Grundkörper selbst gefügt werden. Alternativ kann der Folienkanal in einem separaten Umformwerkzeug vorgefügt und anschließend im Grundkörper eingefügt werden.

Je nach Herstellungsverfahren und Art des verwendeten Kunststoffs kann die Kunststofflage im aufgewölbten Zustand erstarren und den Folienkanal bilden, wobei es an Berührungspunkten mit der Innenwand des Grundkörpers zu Anhaftungen kommen kann. Bei weitgehend flexiblem und weichem Kunststoff haftet dieser an der Innenwand des Grundkörpers an, so dass der Folienkanal gebildet ist.

In einer möglichen Ausführungsform wird der Folienkanal aus mindestens zwei tiefgezogenen Halbschalen gebildet, die im Grundkörper eingefügt werden. Je nach Herstellungsverfahren wird der Grundkörper dabei als Umformwerkzeug zur Herstellung der beiden tiefgezogenen Halbschalen verwendet. Dabei wird der Folienkanal aus wenigstens zwei tiefgezogenen, in wenigstens ein Element des Grundkörpers eingelegten und dort befestigten Kunststofflagen oder -folien gebildet. Zwischen den eingelegten, tiefgezogenen Halbschalen ist mindestens eine weitere Kunststofflage oder Kunststoff folie zusätzlich eingebracht, wodurch eine Teilung des Folienkanals in zwei Kammerkanäle möglich ist, in welchen verschiedene Fluide, z.B. Frischluft oder Warmluft, gleichzeitig geführt werden können. Dadurch, dass zwischen eingelegten, tiefgezogenen Halbschalen mindestens zwei flache Kunststofffolien zusätzlich eingebracht werden, zwischen denen mittels eingeströmter warmer Luft mindestens eine Auswölbung erzeugt wird, kann mit einfachen Mitteln ein Folienkanal mit drei oder mehr Kammerkanälen hergestellt werden.

Zusätzlich zur Eigenhaftung des Folienkanals am Grundkörper kann der Folienkanal mittels eines Befestigungselements am Grundkörper gehalten werden. Eine zusätzliche Befestigung des Folienkanals an wenigstens einem Element des Grundkörpers erhöht die Stabilität, insbesondere auch gegen Verschiebungen des Folienkanals gegenüber dem Grundkörper im Betrieb als Strömungskanal.

Für eine möglichst gute Tragstruktur und Tragkonstruktion des Bauteils kann der Grundkörper zusätzlich zumindest partiell, insbesondere entlang seiner Längsausdehnung, vom Kunststoff beschichtet, insbesondere umspritzt sein. Vorzugsweise wird der Grundkörper innen- und/oder außenseitig mit Kunststoff versehen. Auch wird der Kunststoff bevorzugt ein- oder mehrschichtig und/oder mit bereichsweise variierender Dicke aufgebracht. Für eine möglichst gute Biege-, Beul- sowie Torsionssteifigkeit des Bauteils wird der Kunststoff vorzugsweise formschlüssig und flächig aufgebracht. Die Kunststoffschicht bewirkt neben einer guten Struktursteifigkeit auch eine thermische Isolierung und/oder Schallisolierung bei einer als Kanal ausgeführten Kunststoffstruktur, welche von einem gasförmigen oder flüssigen Medium durchströmt wird. Zusätzlich kann eine der Kunststoffschichten mit einer Verstärkung, insbesondere mit einem Verstärkungsgewebe, mit Fasern, Kugeln oder anderen Materialien, z. B. einem Glasfasergewebe, versehen werden. Zur besseren thermischen und akustischen Isolation kann die Kunststoffschicht aufgeschäumt ausgebildet sein. Dabei wird PU-Schaum, Hart- oder Weich-Schaum, Integralschaum, physikalisch oder chemisch aufgeschäumt (TSG Thermoplastischer Schaum-Spritzguß, Mucell-Verfahren, etc.) oder mehrschichtig ausgeführt, wobei einzelne Schichten unterschiedliche Dichten aufweisen können.

Vorzugsweise wird ein aus einem Metall oder Leichtmetall, insbesondere Aluminium, Magnesium oder Feinstahl, gebildeter Grundkörper mit einer Wanddicke von 0,4 mm bis 1,5 mm, bis 2,0 mm oder bis 3,0 mm verwendet. Je nach Art und Funktion des Bauteils kann der Grundkörper mit bereichsweise variierender Wanddicke geformt werden. Beispielsweise kann bei einer Verwendung des Bauteils als Querträger dieser im Bereich von Halterungen und Krafteinleitungsstellen im Fahrzeug, z. B. im Bereich einer Anbindung an eine A-Säule, im Lenkungsbereich, im Anbindungsbereich einer Klimaanlage oder bei so genannten Front-End-Bauteilen in den Bereichen der Längsträger, der Motorlager oder des Haubenschlosses, mit einer dickeren Wandstärke ausgebildet sein als im Bereich, in dem das Bauteil lediglich als Luftführungskanal, als Montageträger oder für andere Funktionen dient. Solche für den Grundkörper verwendete Bleche sind als "Tailored Blanks" (bereichsweise zusammengeschweißt), "Tailored rolled Blanks" (gewalzt mit unterschiedlicher Dicke in Walzrichtung), "Profiliertes Band" (z. B. Rand dick, Mitte dünn) oder als "Patch-Work-Bleche" (wie bei einem Puzzle, jedoch jedes Teil mit unterschiedlicher Wandstärke zur Platine gefügt) verfügbar. Ein derartiger metallischer Grundkörper oder ein solches Blechteil ist besonders kostengünstig und für einen auf Gewichtsreduzierung ausgelegten Leichtbau im Fahrzeugbau besonders geeignet.

Bevorzugt wird das oben beschriebene Bauteil als Instrumententafelträger in einem Fahrzeug verwendet, wobei der Kunststoffkern oder die Kunststoffstruktur einen oder mehrere Kanäle, insbesondere einen Luftführungskanal und/oder einen Kabelkanal, bildet. Alternativ kann ein derartiges Bauteil als Querträger in einem Fahrzeug, insbesondere als Querträger zwischen den A-Säulen eines Fahrzeugs, verwendet werden.

Die mit der Erfindung erzielten Vorteile bestehen insbesondere darin, dass durch ein mit einem Folienkanal ausgestatteten Grundkörper ein weitgehend leichtes Bauteil mit besonders geringem Bauvolumen gegeben ist. Zudem ist das Bauteil mit einem besonders einfachen Umformwerkzeug herstellbar. Somit ist ein Bauteil als Luftführungskanal aufgrund niedriger Werkstoff- und Bauteilkosten besonders kostengünstig. Das Bauteil weist zudem ein besonders geringes Gewicht auf. Durch die flexible Gestaltung des Folienkanals sind verschiedene Strömungskanäle möglich.

Ausführungsbeispiele der Erfindung werden anhand einer Zeichnung näher erläutert. Darin zeigen:
- Figur 1: schematisch eine Gesamtansicht eines Bauteils, insbesondere eines Hybridträgers,
- Figuren 2A bis 2D: schematisch die Herstellung eines nicht erfindungsgemäßen Bauteils mit einem Folienkanal im Querschnitt in einem Umformwerkzeug,
- Figuren 3A bis 3B: schematisch das Einlegen eines Folienkanals in einen Grundkörper eines nicht erfindungsgemäßen Bauteils im Querschnitt,
- Figuren 4A bis 4C: schematisch die Herstellung und Anordnung eines Folienkanals in einem Grundkörper eines nicht erfindungegemäßen Bauteils im Querschnitt, und
- Figuren 5A bis 5B: schematisch zwei Bauteile, insbesondere Hybridträger mit einem Folienkanal als zwei Kammerkanal im Querschnitt.

Einander entsprechende Teile sind in allen Figuren mit den gleichen Bezugszeichen versehen.

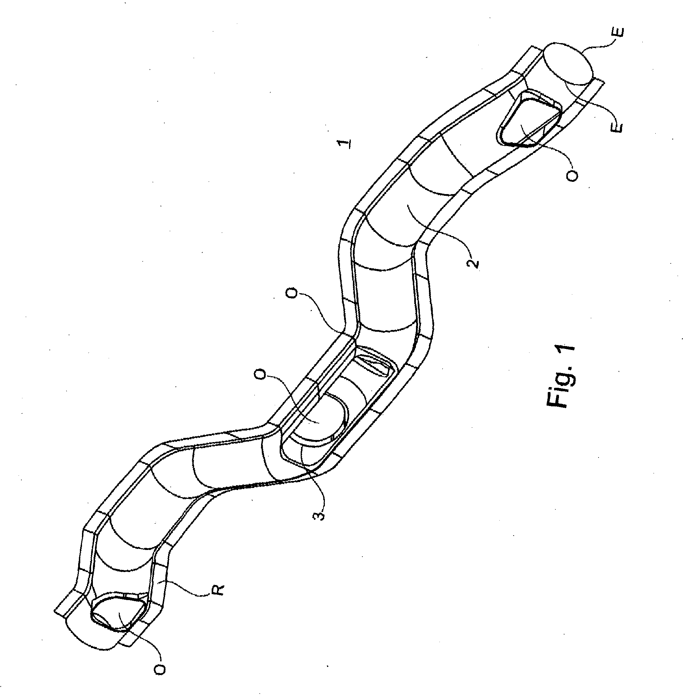

In Figur 1 ist in perspektivischer Darstellung ein Bauteil 1, insbesondere ein Hybridbauteil für einen Träger zum Anordnen zwischen nicht näher dargestellten A-Säulen eines nicht näher dargestellten Fahrzeugs gezeigt.

Das Bauteil 1 umfasst beispielsweise einen aus zwei zusammengefügten Elementen E gebildeten Grundkörper 2, der mit einem Folienkanal 3 ausgekleidet ist. Das Bauteil 1 umfasst des Weiteren für eine Belüftung des Innenraums des Fahrzeugs mehrere Öffnungen O, die als Lufteintritte und/oder Luftaustritte dienen. Im mittleren Bereich ist beispielsweise eine Öffnung O für die Luftzufuhr aus einer Klimaanlage und/oder Heizung und eine Öffnung O für eine mittlere Auslassdüse vorgesehen. An den Enden des Trägers 1 befinden sich Öffnungen O für die äußeren Auslassdüsen.

Der Folienkanal 3 dient als Strömungskanal zum Führen beispielsweise von Luft oder zum Führen von Kabeln. Der Folienkanal 3 ist in einer möglichen Ausführungsform aus geschäumter oder extrudierter Polypropylenschaumfolie gebildet. Bevorzugt weist der Folienkanal 3 eine Wanddicke von 0,4 mm bis 0,5 mm auf bei einer Dichte von 60g/l bis 200 g/l oder 300 g/l. Zusätzlich kann der Folienkanal 3 mit einer thermisch isolierenden Deckschicht versehen sein.

Die Grundkörper 2 ist bevorzugt aus einem Blech, insbesondere einem Leichtmetall-Blech, z.B. aus Aluminium-Blech, Magnesium-Blech oder Feinstahl-Blech, gebildet. Der Grundkörper 2 ist im Ausführungsbeispiel als Hohlprofil, insbesondere als ein rohrartiges Hohlprofil, ausgeführt. Alternativ kann der Grundkörper auch als ein Hohlprofil mit einem kastenförmigen Querschnitt gebildet sein. Dabei bildet eines der Elemente E des Grundkörpers 2 ein U-Profil oder eine Halb- oder Unterschale, das andere Element E ist als Deckel ausgeführt. Der Grundkörper 2 weist eine Wanddicke von 0,7 mm bis 1,2 mm auf. Der Grundkörper 2 kann darüber hinaus innenseitig mit Kunststoff versehen sein. Der Kunststoff ist in Art einer Kunststoffauskleidung angefügt, eingefügt oder angespritzt.

Für eine möglichst gute Nutzung des Folienkanals 3 zur Führung eines Mediums, z.B. von Luft zur Klimatisierung eines Fahrzeuginnenraums oder alternativ von Leitungen oder Kabeln, sind die beiden Elemente E über Ränder R hinreichend fest miteinander zu verbinden. Die Ränder R bilden dabei die Trennebene zwischen zwei Elementen E. Dazu werden die Elemente E im geschlossenen Zustand des Grundkörpers 2 an übereinander liegenden Rändern R miteinander mechanisch und/oder stoffschlüssig verbunden. Dabei kann der Grundkörper 2 durch Verstemmen an den aneinander liegenden Rändern R der Elemente E genietet, geschraubt, geschweißt, geklebt, gebördelt, verstemmt, geclincht oder in ähnlicher Weise verbunden sein. Zusätzlich kann der Grundkörper 2, insbesondere dessen zwei Elemente E, an den Rändern R an nicht näher dargestellten Öffnungen, z.B. Auskragungen, über den Kunststoff zusammengehalten werden.

Die aus dem Kunststoff gebildete innenwandige Kunststoffauskleidung dient unter anderem der Erhöhung der Steifigkeit des Grundkörpers 2. Der besonders dünnwandig ausgebildete Grundkörper 2 führt beim Durchströmen mit Luft zu einer Geräuschentwicklung, welche besonders vorteilhaft durch Auskleidung des Grundkörpers 2 mit dem Kunststoff gedämpft wird. D.h. der Kunststoff übernimmt eine Schallisolierung und ggf. auch eine thermische Isolierung.

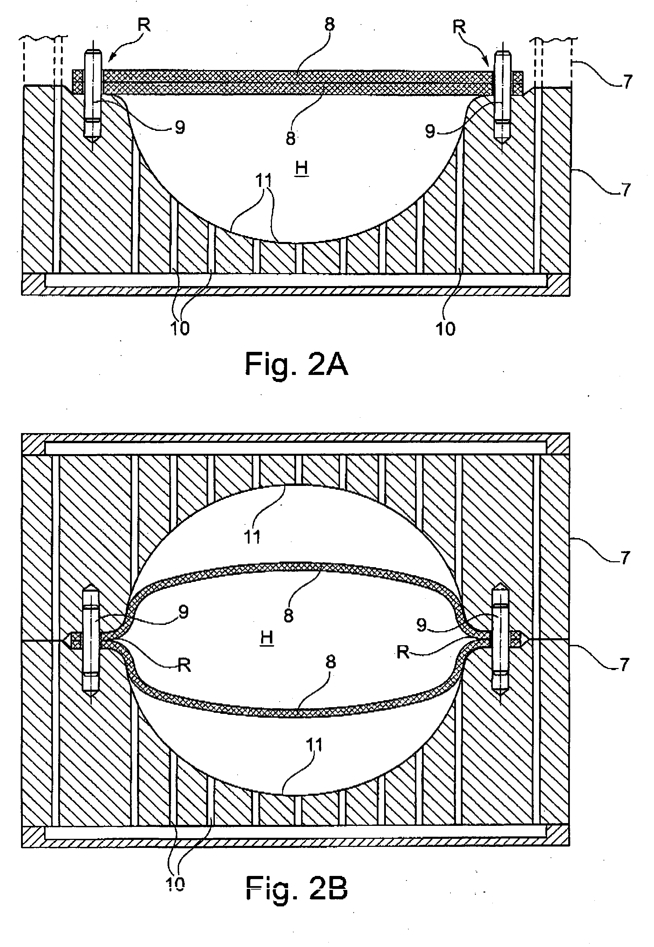

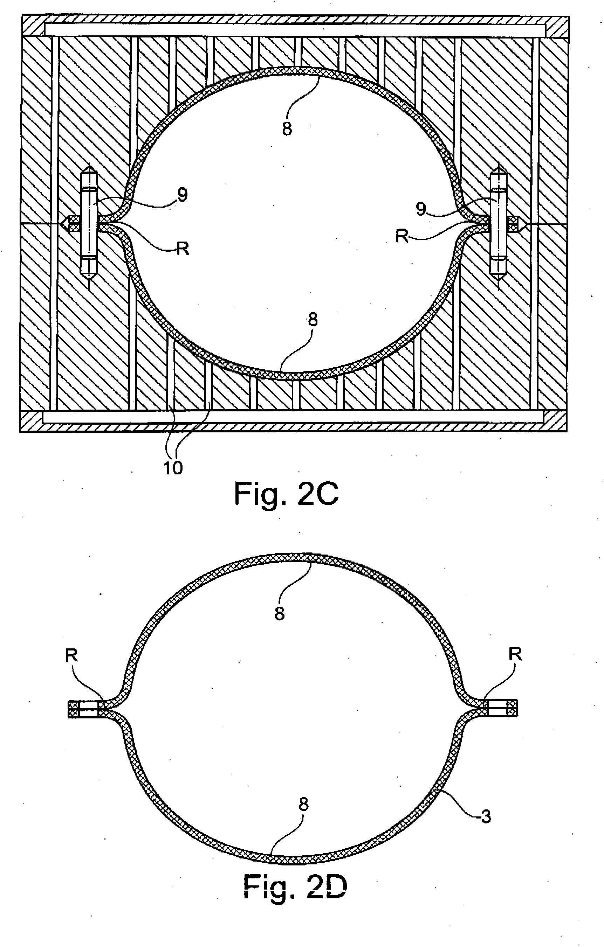

Die Figuren 2A, 2B und 2C zeigen das sogenannte Twin-Sheet-Verfahren. Dabei werden in einem separaten Umformwerkzeug 7 mit einem Hohlraum H, zur Formung und Bildung des Folienkanals 3 zwei plane Kunststofflagen 8 oder Kunststofffolien eingespannt. Als Kunststofflagen 8 werden beispielsweise Polypropylenschaumfolien oder Polyethylenschaumfolien eingespannt. Die Kunststofflagen 8 werden an ihren Rändern R mittels Verbindungselementen 9 miteinander verbunden, z.B. verschraubt, verpresst oder verschweißt. Das Umformwerkzeug 7 weist mehrere Ausnehmungen 10 in Form von Längsbohrungen auf, durch die von außen beispielsweise ein Unterdruck angelegt werden kann, der auf den Innenraum (= Hohlraum H) des Umformwerkzeugs 7 wirkt. An der Innenwand des Hohlraums H des Umformwerkzeugs 7 ist ein Gitter 11 angeordnet.

In Figur 2A werden die Kunststofflagen 8 vorgewärmt, wodurch sie einen teigartigen Zustand erreichen und dehnbar werden. Anschließend wird zwischen die beiden Kunststofflagen 8 warme oder heiße Luft eingeblasen und somit ein Überdruck erzeugt. Mittels des über die Ausnehmungen 10 von außen angelegten Unterdrucks werden die Kunststofflagen 8 auseinandergewölbt wie in Figur 2B zu sehen und in die einander gegenüberliegenden Kavitäten des Umformwerkzeugs 7 gedrückt bzw. gesaugt.

Der Prozess wird fortgesetzt, bis sich die Kunststofflagen 8 an die Innenwand des Umformwerkzeugs 7 anwölben wie in Figur 2C gezeigt. Durch die Gitter 11 wird eine Ausdehnung in die Ausnehmungen 10 hinein verhindert. Das Material des Umformwerkzeugs 7 ist derart beschaffen, dass keine Adhäsion mit dem Folienmaterial stattfindet. Nach dem Erkalten und Öffnen des Umformwerkzeugs 7 sowie dem Entfernen der Spannvorrichtungen behält die Kunststofflage 8 aufgrund ausreichender Eigensteifigkeit ihre Gestalt eines Kanals bei, der den Folienkanal 3 des Bauteils 1 bildet, dargestellt in Figur 2D. Die Kunststofflagen 8 können kompakte, geschäumte und/oder ein- und/oder mehrlagige Gebilde sein. Auch eine Schlauchfolie kann eingesetzt werden.

Um ein Durchhängen des Folienkanals 3 zu vermeiden, können zusätzliche Verstärkungselemente auf der Folie aufgebracht sein, beispielsweise Klebestreifen, welche zusätzlich eine Haftung an der Innenwand des Grundkörpers 2 bewirken. Alternativ oder zusätzlich können dünne Streifen eines stärkeren Kunststoffs oder textile Flächengebilde verwendet werden.

Anstelle von Über- und/oder Unterdruck zur Auswölbung des Folienkanals 3 ist auch ein einfaches Aufeinanderzuschieben der verbundenen Ränder R, z.B. der verschweißten oder auch verpressten Folienränder, möglich. Ebenso kann mittels Verkürzen von auf der Kunststofflage 8 aufgebrachten Federelementen die Wölbung der Kunststofffolie oder -lage 8 in den Kavitäten des Umformwerkzeugs 7, insbesondere in dessen Halbschalen, erreicht werden.

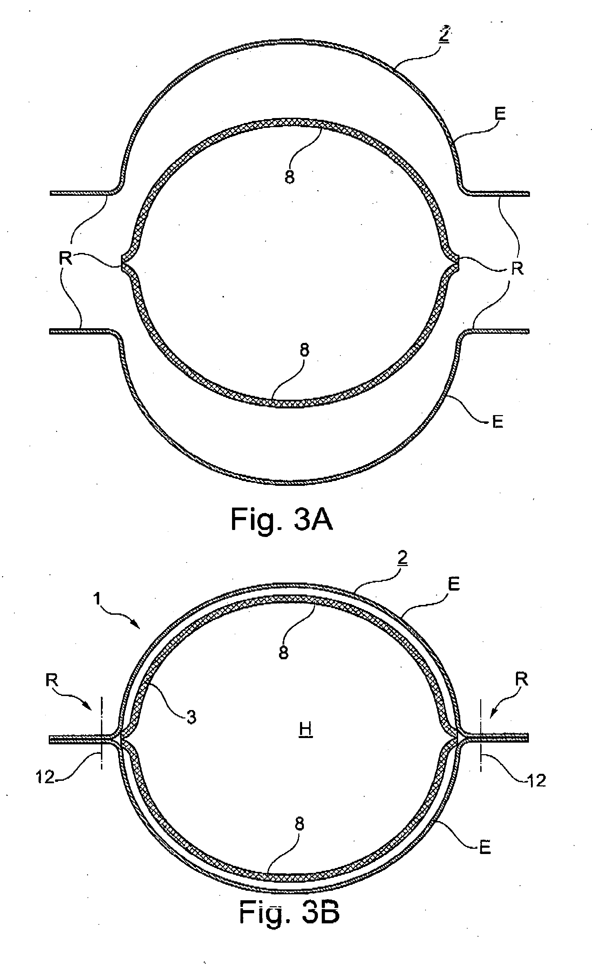

In Figur 3A wird dargestellt, wie der Folienkanal 3 in die Elemente E, z.B. zwei Blechhalbschalen, des Grundkörpers 2 eingefügt wird. Nach dem Aneinanderfügen der Elemente E ist das Bauteil 1, der Hybridträger, fertiggestellt, dieses Stadium zeigt Figur 3B. Der Folienkanal 3 wird beispielsweise thermisch haftend an Klebepunkten am Grundkörper 2 angefügt. Alternativ kann der Folienkanal 3 an seinem Rand R mittels eines Befestigungselements 12 am Rand des Grundkörpers 2 oder anderweitig an diesen befestigt werden.

Alternativ zu einem im Twin-Sheet-Verfahren gefertigten Folienkanal 3 können die Kunststofflagen 8 auch als zwei tiefgezogene Halbschalen aus kompaktem dünnem oder aus geschäumtem Kunststoff in die Elemente E eingelegt und dort befestigt werden. Zwischen diese tiefgezogenen Halbschalen kann eine oder mehrere weitere Kunststofffolien oder -lage oder tiefgezogene Schichten eingelegt werden, welche den Innenraum des Folienkanals 3 in zwei oder entsprechend mehr Kammern unterteilt.

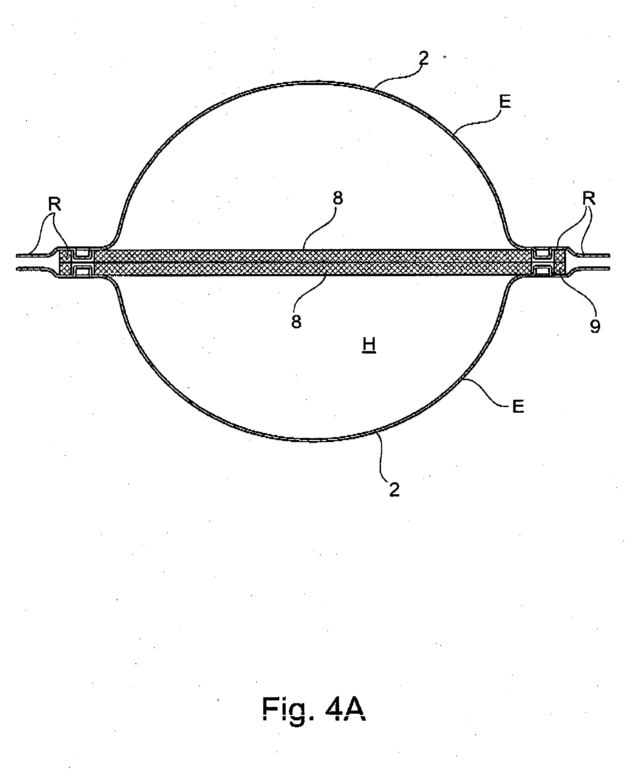

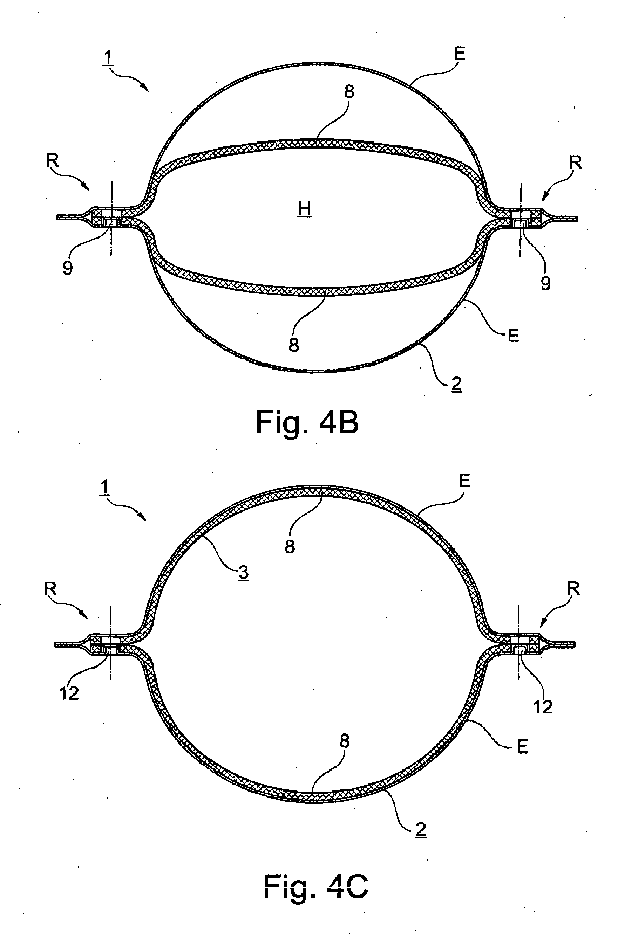

Anstatt den Folienkanal 3 in einem separaten Umformwerkzeug 7 vorzufertigen, kann der Folienkanal 3 im Grundkörper 2 selbst geformt werden. Wie in Figur 4A gezeigt, werden analog zum Umformwerkzeug 7 zwei Kunststofffolien oder -lagen 8 in den Hohlraum H des Grundkörpers 2 eingespannt und an den Rändern R mittels Verbindungselementen 9 verbunden, z.B. verschraubt oder verpresst. Zunächst werden die Kunststofflagen 8 vorgewärmt. Anschließend wird durch Überdruck die Auseinanderwölbung der Kunststofflagen 8 bewirkt, dargestellt in Figur 4B. Dies erfolgt, bis die Kunststofflagen 8 an den Elementen E anliegen, dargestellt in Figur 4C. Dabei kommt es aufgrund der Wärme zu einem Klebeeffekt des Kunststoffs an den Innenseiten der Elemente E, wodurch bereits eine selbsthaftende oder - klebende Fixierung des derart gebildeten Folienkanals 3 bewirkt wird. Eine zusätzliche Befestigung mittels Befestigungselementen 12 ist möglich.

Analog zum Umformwerkzeug 7 können die Elemente E bei diesem Vorgehen Ausnehmungen aufweisen, so dass einerseits die gleichmäßige Ausdehnung der Kunststofflagen 8 verbessert wird und andererseits zusätzlich oder alternativ zum Überdruck durch Einströmen von warmer Luft von außen ein Unterdruck angelegt werden kann.

Der Folienkanal 3 kann als Luftführungskanal einmal von Frischluft, von Kaltluft oder Warmluft durchströmt werden, um beispielsweise bei Kondenswasser im Kanal eine Trocknung oder eine schnelle Enteisung einer Frontscheibe zu bewirken.

Grundsätzlich können durch mehrere Kunststofffolien, die in die entsprechenden geometrischen Verhältnisse expandiert und/oder geformt werden, oder auch durch flache oder tiefgezogene Kunststoffhalbschalen mehrere Kammern oder Kammerkanäle innerhalb des Folienkanals 3 gebildet werden, in denen unterschiedliche Medien, z.B. Frischluft, Warmluft, Kaltluft, geführt werden.

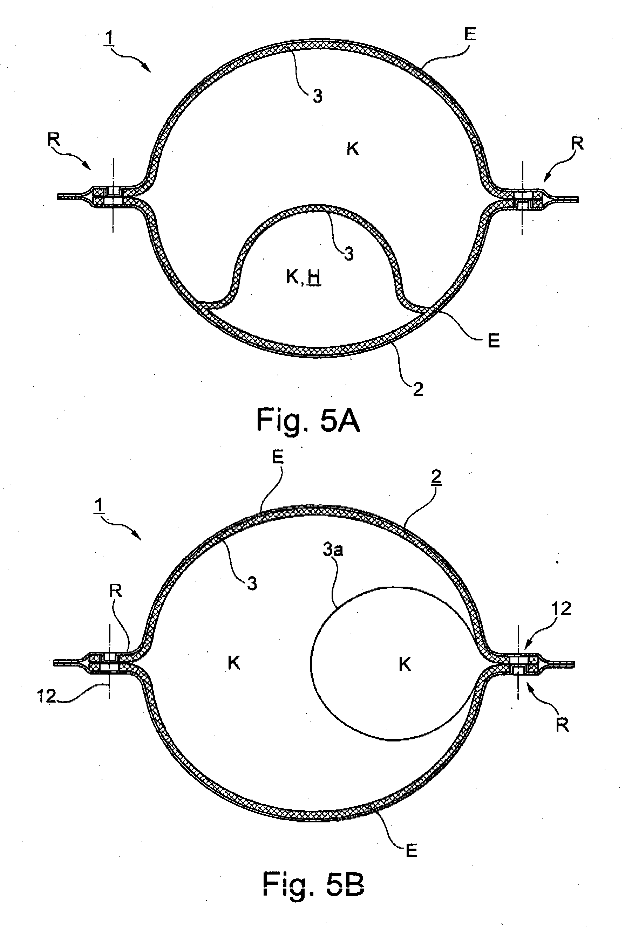

Figur 5A zeigt dazu Bauteil 1, in dem sich der Folienkanal 3 nur in Richtung des einen Elements E des Grundkörpers 2 vollständig aufwölbt und an die Innenwand anfügt. In Richtung des anderen Elements E jedoch wird durch einströmende Luft in den Hohlraum H zwischen der Innenwand des betreffenden Elements E und dem Folienkanal 3 das Aufwölben begrenzt, so dass nach dem Erstarren des Kunststoffs ein Hohlraum H zwischen der Innenwand des betreffenden Elements E und des nur teilweise aufgewölbten Foliekanals 3 gebildet ist, der als zusätzliche Kammer K, also als Führungskanal genutzt werden kann.

Figur 5B zeigt einen Grundkörper 2 mit einem weiteren Folienkanal 3a, d.h. im Grundkörper 2 sind mehrere Folienkanäle 3 und 3a angeordnet. Der Folienkanal 3a ist mit einer hinreichend hohen Eigensteifigkeit und einem kleineren Querschnitt als dem des äußeren Folienkanals 3 ausgebildet. Zusätzlich können die Elemente E an der Innenseite mit angespritztem Kunststoff ausgekleidet sein.

Durch Ausspritzen eines der Elemente E mit kompaktem oder geschäumtem Kunststoff, während das andere Element E mit einem elastischen Werkstoff oder einer elastischen Kunststoffschale ausgekleidet ist, können auch Bauteile wie Halter, Clips oder Aufnahmen integriert werden, welche auch größere Kräfte oder andere Aufgaben übernehmen können.

Die Folienkanäle 3 lassen sich generell nicht nur in Grundkörper 2 mit geschlossenem Hohlprofil in Form eines Hohlzylinders aus Halbschalen verwenden, sondern auch in beliebigen Hohlprofilen, insbesondere in U-Profilen mit ebenem Deckel.

Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist. Der Grundkörper 2 ist dazu mit mehreren in Längsrichtung gesehen in Abstand zueinander angeordneten Strömungsabgriffen mit Öffnungen O zum Ein- und/oder Austritt eines im Folienkanal 3 geführten Mediums, z. B. Luft, versehen. Selbstverständlich kann die Anzahl und Anordnung der Ein- und Austritte beliebig variiert werden. Ferner kann ein Ein- oder Austritt auch im Bereich der Ränder R erfolgen und sowohl nur in einer Schale des Grundkörpers 2 als auch über beide Schalen sich erstrecken.

Im Weiteren kann ein solches Bauteil 1 auch an anderen Stellen in einem Fahrzeug eingesetzt werden. Beispiele sind: A-, B-, C-, D-Säulen, Längsträger, Fahrzeugschweller, Dachholme, etc. Auch durch diese Bauteile 1 kann Luft einer Klimaanlage (kurz HVAC genannt) Platz sparend geführt und verteilt werden, wobei das Bauteil 1 als Strukturteil im Fahrzeug, insbesondere als Hohistrukturteil, ausgeführt ist.

### Bezugszeichenliste

- 1: Bauteil, insbesondere Hybrid-Bauteil
- 2: Grundkörper
- 3: Folienkanal
- 7: Umformwerkzeug
- 8: Kunststofflage, insbesondere Kunststofffolie
- 9: Verbindungselement
- 10: Ausnehmung, z.B. Bohrung
- 11: Gitter
- 12: Befestigungselement

- H: Hohlraum
- K: Kammer, insbesondere Kammerkanal
- O: Öffnung, insbesondere für Luftein- und/oder Luftaustritt
- R: Ränder

## Patentansprüche

1. Bauteil (1), insbesondere Hybridträger für einen Träger in einem Fahrzeug, mit einem einen Hohlraum (H) aufweisenden Grundkörper (2) mit einer zumindest innen liegenden Kunststoffauskleidung, wobei die Kunststoffauskleidung durch einen im Hohlraum (H) des Grundkörpers (2) angeordneten Folienkanal (3, 3a) aus Kunststoff gebildet ist, **dadurch gekennzeichnet, dass**, mehrere in Längsrichtung des Grundkörpers (2) ineinander gefügte Folienkanäle (3, 3a) im Grundkörper (2) angeordnet sind.

2. Bauteil nach dem Oberbegriff des Anspruchs 1, **dadurch gekennzeichnet, dass,** der Folienkanal (3, 3a) mit einer in dessen Längsrichtung verlaufenden Trennwand versehen ist.

3. Bauteil nach Anspruch 1 oder 2, bei dem der Grundkörper (2) aus mindestens zwei Elementen (E), insbesondere einer Halbschale mit einem Deckel oder zwei Halbschalen, gebildet ist.

4. Bauteil nach einem der Ansprüche 1 bis 3, bei dem der Grundkörper (2) eine Wanddicke von 0,7 mm bis 1,2 mm aufweist.

5. Bauteil nach einem der vorhergehenden Ansprüche, bei dem der Folienkanal (3, 3a) aus einem Thermoplast, insbesondere aus Polyethylen oder Polypropylen gebildet ist.

6. Bauteil nach einem der vorhergehenden Ansprüche, bei dem der Folienkanal (3, 3a) aus physikalisch oder chemisch geschäumtem und extrudiertem Kunststoff, insbesondere ein- oder mehrschichtig, geformt und gebildet ist.

7. Bauteil nach einem der vorhergehenden Ansprüche, bei dem der Folienkanal (3, 3a) aus einem kompakten dünnen Kunststoff, insbesondere einem ein- oder mehrschichtigen Kunststoff, gebildet ist.

8. Bauteil nach einem der vorhergehenden Ansprüche, bei dem die Wandstärke des Folienkanals (3, 3a) 0,2 mm bis 0,5 mm und die Dichte des Kunststoffs 60 g/l bis 200g/l oder 300 g/l beträgt.

9. Bauteil nach einem der vorhergehenden Ansprüche, bei dem der Folienkanal (3, 3a) aus mindestens zwei Kunststofflagen (8) gebildet ist.

10. Bauteil nach einem der vorhergehenden Ansprüche, **dadurch gekennzeichnet, dass** der Folienkanal (3, 3a) thermisch klebend und/oder haftend am Grundkörper (2) befestigt ist.

11. Bauteil nach einem der vorhergehenden Ansprüche, bei dem der Folienkanal (3, 3a) mittels Befestigungselementen (12) am Grundkörper (2) angeordnet ist.

12. Bauteil nach einem der vorhergehenden Ansprüche, bei dem der Folienkanal (3, 3a) einen kleineren Querschnitt als den Querschnitt des Grundkörpers (2) aufweist und derart im Grundkörper angeordnet ist, dass wenigstens zwei Kammerkanäle (K) gebildet sind.

13. Bauteil nach einem der vorhergehenden Ansprüche, bei dem der Grundkörper (2) zusätzlich an der Innenwand wenigstens teilweise mit angespritztem Kunststoff ausgekleidet ist.

14. Bauteil nach einem der vorhergehenden Ansprüche, bei dem der Folienkanal (3, 3a) auf seiner äußeren, dem Grundkörper (2) zugewandten Seite Verstärkungselemente aufweist.

15. Bauteil nach einem der vorhergehenden Ansprüche, bei dem mindestens ein Folienkanal (3, 3a) als eine tiefgezogene Halbschale ausgebildet ist.

16. Verwendung eines Bauteils (1) nach einem der Ansprüche 1 bis 15 als Instrumententafelträger in einem Fahrzeug mit einem Folienkanal (3, 3a), insbesondere mit wenigstens einem Luftführungskanal und/oder einem Kabelkanal.

17. Verwendung eines Bauteils (1) nach einem der Ansprüche 1 bis 15 als Strukturteil in einem Fahrzeug, insbesondere als Hohlstrukturteil, als Längsträger, Schweller, Mitteltunnelstruktur, Vorbau- Längs- oder -Querträger, Vertikalstrukturteil, A-, B-, C-, D-Säule oder Dachstrukturteil.

18. Verwendung eines Bauteils (1) nach einem der Ansprüche 1 bis 15 als Strukturteil in einem Fahrzeug, insbesondere als Hohlstrukturteil, durch welches Luft eines Heizungs-, Kühlungs-, Klimatisierungs- oder Belüftungs-Gerätes geführt wird.

## Claims

1. A component (1), particularly a hybrid carrier for a carrier in a vehicle, comprising a base body (2) exhibiting a cavity (H) and having at least one inner plastic lining, the plastic lining being formed by a film channel (3, 3a) which is made of plastic and which is arranged in the cavity (H) of the base body (2), **characterized in that** a plurality of film channels (3, 3a) which are inserted into each other in the longitudinal direction of the base body (2) are arranged in the base body (2).

2. The component as claimed in the preamble of claim 1, **characterized in that** the film channel (3, 3a) is provided with a partition wall extending in the longitudinal direction thereof.

3. The component as claimed in claim 1 or 2, in which the base body (2) is formed from at least two elements (E), in particular a half shell with a lid or two half shells.

4. A component as claimed in any one of claims 1 to 3, in which the base body (2) exhibits a wall thickness of 0.7 mm to 1.2 mm.

5. A component as claimed in any one of the preceding claims, in which the film channel (3, 3a) is made from a thermoplastic, in particular from polyethylene or polypropylene.

6. A component as claimed in any one of the preceding claims, in which the film channel (3, 3a) is formed and produced from physically or chemically foamed and extruded plastic, in particular in single-layer or multiple-layer form.

7. A component as claimed in any one of the preceding claims, in which the film channel (3, 3a) is formed from a compact, thin plastic, in particular from a single-layer or multiple-layer plastic.

8. A component as claimed in any one of the preceding claims, in which the wall thickness of the film channel (3, 3a) is 0.2 mm to 0.5 mm, and the density of the plastic is 60 g/l to 200 g/l or 300 g/l.

9. A component as claimed in any one of the preceding claims, in which the film channel (3, 3a) is formed from at least two plastic layers (8).

10. A component as claimed in any one of the preceding claims, **characterized in that** the film channel (3, 3a) is attached in a thermally adhesive and/or bonding fashion to the base body (2).

11. A component as claimed in any one of the preceding claims, in which the film channel (3, 3a) is arranged on the base body (2) by means of securing elements (12).

12. A component as claimed in any one of the preceding claims, in which the film channel (3, 3a) exhibits a smaller cross section than the cross section of the base body (2) and is arranged inside the base body in such a way that at least two chamber channels (K) are formed.

13. a component as claimed in any one of the preceding claims, in which the base body (2) is lined additionally on the internal wall, at least partially, with plastic applied by spraying.

14. A component as claimed in any one of the preceding claims, in which the film channel (3, 3a) is provided with reinforcing elements on the outer side thereof facing the base body (2).

15. A component as claimed in any one of the preceding claims, in which at least one film channel (3, 3a) is executed as a deep-drawn half shell.

16. Use of a component (1) as claimed in any one of claims 1 to 15 as an instrument panel carrier in a vehicle, comprising a film channel (3, 3a), in particular comprising at least one air-guiding channel and/or a cable channel.

17. Use of a component (1) as claimed in any one of claims 1 to 15 as a structural component in a vehicle, in particular as a hollow structural component, as a longitudinal member, sill, center tunnel structure, front-end longitudinal or transverse member, vertical structural element, A-, B-, C-, D-pillar, or roof structural element.

18. Use of a component (1) as claimed in any one of claims 1 to 15 as a structural component in a vehicle, in particular as a hollow structural component, through which air for a heating, cooling, air conditioning or ventilation device is conducted.

## Revendications

1. Pièce (1), en particulier support hybride pour un support dans un véhicule automobile, comprenant un corps de base (2) présentant un espace creux (H), ledit corps de base comportant au moins un revêtement en matière plastique placé à l'intérieur, où le revêtement en matière plastique est formé par un conduit en feuille (3, 3a), en matière plastique, disposé dans l'espace creux (H) du corps de base (2),
**caractérisée en ce que** plusieurs conduits en feuille (3, 3a) sont disposés dans le corps de base (2) en étant emboîtés les uns dans les autres, dans le sens de la longueur du corps de base (2).

2. Pièce selon le préambule de la revendication 1,
**caractérisée en ce que** le conduit en feuille (3, 3a) est doté d'une paroi de séparation s'étendant dans le sens de la longueur dudit conduit en feuille.

3. Pièce selon la revendication 1 ou 2, dans laquelle le corps de base (2) est formé par au moins deux éléments (E), en particulier par une demi-coque comportant un couvercle, ou bien par deux demi-coques.

4. Pièce selon l'une quelconque des revendications 1 à 3, dans laquelle le corps de base (2) présente une épaisseur de paroi comprise entre 0,7 mm et 1,2 mm.

5. Pièce selon l'une quelconque des revendications précédentes, dans laquelle le conduit en feuille (3, 3a) est formé par une matière thermoplastique constituée, en particulier, de polyéthylène ou de polypropylène.

6. Pièce selon l'une quelconque des revendications précédentes, dans laquelle le conduit en feuille (3, 3a) est formé et constitué d'une matière plastique physiquement ou chimiquement expansée et extrudée, et se composant, en particulier, d'une ou de plusieurs couches.

7. Pièce selon l'une quelconque des revendications précédentes, dans laquelle le conduit en feuille (3, 3a) est formé par une matière plastique compacte, de faible épaisseur, en particulier par une matière plastique se composant d'une ou de plusieurs couches.

8. Pièce selon l'une quelconque des revendications précédentes, dans laquelle l'épaisseur de paroi du conduit en feuille (3, 3a) est comprise entre 0,2 mm et 0,5 mm, la densité de la matière plastique étant de 60 g/l à 200 g/l ou de 300 g/l.

9. Pièce selon l'une quelconque des revendications précédentes, dans laquelle le conduit en feuille (3, 3a) est formé par au moins deux couches (8) de matière plastique.

10. Pièce selon l'une quelconque des revendications précédentes, **caractérisée en ce que** le conduit en feuille (3, 3a) est fixé sur le corps de base (2) en étant thermocollé et / ou en adhérant par procédé thermique.

11. Pièce selon l'une quelconque des revendications précédentes, dans laquelle le conduit en feuille (3, 3a) est disposé sur le corps de base (2), au moyen d'éléments de fixation (12).

12. Pièce selon l'une quelconque des revendications précédentes, dans laquelle le conduit en feuille (3, 3a) présente une section inférieure à la section du corps de base (2) et est disposé dans le corps de base, de manière telle qu'au moins deux conduits de chambre (K) soient formés.

13. Pièce selon l'une quelconque des revendications précédentes, dans laquelle le corps de base (2) est revêtu en outre, sur la paroi intérieure, au moins partiellement d'une matière plastique injectée.

14. Pièce selon l'une quelconque des revendications précédentes, dans laquelle le conduit en feuille (3, 3a), sur son côté extérieur tourné vers le corps de base (2), présente des éléments de renfort.

15. Pièce selon l'une quelconque des revendications précédentes, dans laquelle au moins un conduit en feuille (3, 3a) est configuré comme une demi-coque réalisée par emboutissage profond.

16. Utilisation d'une pièce (1) selon l'une quelconque des revendications 1 à 15, comme support de tableau de bord dans un véhicule automobile, comprenant un conduit en feuille (3, 3a), comprenant en particulier au moins un conduit de guidage d'air et / ou un conduit de câbles.

17. Utilisation d'une pièce (1) selon l'une quelconque des revendications 1 à 15, comme pièce de structure dans un véhicule automobile, en particulier comme pièce de structure creuse, comme longeron, seuil de porte, structure de tunnel central, support de partie avant, longeron ou traverse, pièce de structure verticale, montant A, B, C, D ou pièce de structure du toit.

18. Utilisation d'une pièce (1) selon l'une quelconque des revendications 1 à 15, comme pièce de structure dans un véhicule automobile, en particulier comme pièce de structure creuse à travers laquelle est guidé de l'air d'un appareil de chauffage, de refroidissement, de climatisation ou de ventilation.
